# EUROPÄISCHE PATENTANMELDUNG

(11) **EP 0 679 669 A1**
(43) Veröffentlichungstag der Anmeldung: **02.11.1995**
(21) Anmeldenummer: 95105551.6
(22) Anmeldetag: 12.04.1995
(51) Int. Cl.: C08G 18/38, C08K 3/32, C08K 5/52, C08J 9/00

(54) **Gegebenenfalls zellige Polyurethane und/oder Polyurethanpolyharnstoffe, ein Verfahren zu ihrer Herstellung und ihre Verwendung**

(30) Priorität: 25.04.1994 DE 4414331
(71) Anmelder: BAYER AG, 51368 Leverkusen (DE)
(72) Erfinder: von Bonin, Wulf, Dr., D-51519 Odenthal (DE)

(57) **Zusammenfassung**

Gegebenenfalls zellige Polyurethane und/oder Polyurethanpolyharnstoffe enthalten in integrierter Form Metallphosphate und/oder Aminsalze saurer Metallphosphate.

## Beschreibung

Bei der Verbesserung des Brandverhaltens von Polyurethanharnstoff-Schaumstoffen versucht man in zunehmendem Maße halogenhaltige Zusätze zu vermeiden.

Man versucht daher z.B., das Brandverhalten von Polyurethan- bzw. Polyharnstoff-Schaumstoffen dadurch positiv zu beeinflussen, indem man ihnen halogenfreie anorganische Füllstoffe zusetzt, zu denen gegebenenfalls auch Metallphosphate gehören können.

Solche preiswerten und oftmals in großen Mengen einsetzbaren Füllstoffe vermindern die spezifische Brandlast relativ wirkungsvoll, obgleich sie das Brennen selbst weniger vermindern. Sie wirken sich zumeist stark negativ auf die mechanischen Eigenschaften der Schaumstoffe aus, weil sie in das Reaktionsgeschehen nicht integriert werden, sondern als mehr oder weniger "tote" Inhomogenitäten und potentielle Kerbstellen im Zellwandgerüst der Schaumstoffe vorliegen und dieses verspröden.

Die Mitverwendung von phosphorhaltigen, löslichen und gegebenenfalls einbaufähigen P-organischen Komponenten in der Schaumstoffrezeptur ist ein weiterer Weg zur Verbesserung des Brandverhaltens. Solche Komponenten sind jedoch vielfach teuer oder potentiell toxisch, bzw. unter Abspaltung von Phosphorsäuren hydrolysegefährdet. Deswegen verbietet sich vielfach dieser Weg des Brandschutzes.

Es wurde nun gefunden, daß es überraschenderweise möglich ist, Polyurethanpolyharnstoff- (Schaumstoff)-Rezepturen auf Basis von Polyolen und Polyisocyanaten zu finden, bei denen als eine in das Reaktionsgeschehen integrierbare Reaktionskomponente wäßrige Lösungen von Metallphosphat-Aminsalzen fungieren.

Überraschenderweise entstehen dabei Polyurethan-, bzw. Polyharnstoff-Schaumstoffe mit in integrierter Form vorliegenden, d.h. mehr oder weniger homogen in das Polymermaterial, z.B. der Zellwände eingebauten, Metallphosphaten. Die Zellwände haben bei mikroskopischer Betrachtung übertaschenderweise glaskaren, einphasigen Charakter.

Es ist weiterhin überraschend, daß dabei sowohl Schaumstoffe mit niedrigen Raumgewichten und zäh-elastischen Eigenschaften, als natürlich auch mit spröden und Hartschaumeigenschaften erhalten werden können.

Es ist weiterhin überraschend, daß die stark polaren, weitgehend anorganischen Metallphosphat-Aminsalz-Reaktionskomponenten offenbar homogen in das organische Material des Schaumstoffgerüsts eingebaut, d.h. integriert werden und daher die Zellwände bei mikroskopischer Betrachtung wie kleine klare Glasscheiben wirken können.

Schließlich ist es überraschend, daß der durch die wäßrigen Lösungen eingeschleppte, enorm hohe Wasseranteil die Schaumstoftbildung nicht negativ beeinflußt, sondern daß leichte, gleichmäßig feinporige und stabile, homogen wirkende Schaumstoff-Formteile erhalten werden können, ohne daß eine stöchiometrisch ausreichende, also auch alles Wasser bindende, Polyisocyanatmenge Einsatz finden müßte.

Die erfindungsgemäßen massiven Polyurethan-Harnstoffe, vorzugsweise Polyurethan-harnstoff-Schaumstoffe sind somit dadurch gekennzeichnet, daß sie vorzugsweise in Gewichtsmengen über 25 % und in extrem fein verteilter, d.h. optisch nahezu nicht charakterisierbar erkennbarer Form, Metallphosphonate und/oder vorzugsweise Metallphosphate eingebaut, d.h. integriert enthalten.

Erfindungsgemäß werden sie hergestellt, indem man ansich techniküblichen Mischungen von Reaktions-, Wirkstoff- und Additivkomponenten der Polyurethanschaumstoff-Chemie, wie sie zur Umsetzung mit den Polyisocyanaten zu Schaumstoffen Verwendung finden können, als weitere Komponente wäßrige Lösungen von Metallphosphonat-, vorzugsweise Metallphosphat-Aminsalzen, insbesondere Metallphosphat-Alkanolamin-Komplexe, hinzufügt.

Gegenstand der Erfindung sind gegebenenfalls zellige Polyurethane und/oder Polyurethan-polyharnstoffe, enthaltend in integrierter Form Metallphosphate und/oder Aminsalze saurer Metallphosphate.

Erfindungsgemäß bevorzugt sind:
- Polyurethan- und/oder Polyurethan-polyharnstoff-Schaumstoffe mit Raumgewichten zwischen 10 und 500 g/l und integrierten Festgehaltsanteilen über 25 Gew.-%, vorzugsweise 50-70 Gew.-%, an Aminsalzen saurer Metallphosphate in Form von Reaktionsprodukten mit Isocyanat-Polyol-Gemischen.
- Polyurethan- und/oder Polyurethan-polyharnstoff-Schaumstoffe in integrierter Form, enthaltend Phosphate der Metalle Mg, Ca, Zn, B, Al, Na, K,
- Polyurethan- und/oder Polyurethan-polyharnstoff-Schaumstoffe, enthaltend Ammonium- und/oder Alkanolaminsalze von sauren Metallphosphaten und
- Polyurethan- und/oder Polyurethan-polyharnstoff-Schaumstoffe, enthaltend Monoethanolaminsalze von sauren Metallphosphaten.

Die Erfindung betrifft auch ein Verfahren zur Herstellung der erfindungsgemäßen vorzugsweise zelligen Polyurethane und/oder Polyurethan-polyharnstoffe durch an sich bekannte Umsetzung von Polyisocyanaten mit Verbindungen mit mindestens zwei reaktionsfähigen Wasserstoffatomen vom Molekülargewicht 62-10 000 und gegebenenfalls Hilfs- und Zusatzmitteln, daß man als zusätzliche Reaktionskomponente wäßrige Lösungen von Aminsalzen saurer Metallphosphate hinzufügt und bei Isocyanat-Kennzahlen von vorzugsweise über 100 (bezogen auf organische Reaktivkomponenten) arbeitet.

Vorzugsweise fügt man dem Reaktionsgemisch zusätzlich Carbonsäuren und/oder Fettsäuren hinzu.

Als Aminsalze von sauren Metallphosphaten werden neben Ammonium- bevorzugt Alkanolaminsalze verwendet.

Als Verbindungen mit mindestens zwei reaktionsfähigen Wasserstoffatomen vom Molekulargewicht 62-10 000 werden vorzugsweise Alkanolamine und/oder deren Alkoxylierungsprodukte verwendet, insbesondere solche mit OH-Zahlen zwischen 400 und 600.

Bei der erfindungsgemäßen Herstellung von Schaumstoffen unterstützt man gegebenenfalls den Aufschäumungsprozess durch zusätzliche Wärmezufuhr.

Die Erfindung betrifft ferner Dämmstoffe und Sandwichkonstruktionen, enthaltend Schaumstoffe gemaß Erfindung.

Erfindungsgemäß sind Metallphosphate bevorzugt. Dieser Begriff soll aber auch die Metallphosphonate, z.B. Al-Salze der Methylphosphonsäure und/oder Metallsalze anderer mehrbasischer Phosphorsäuren, etwa Pyro-, Oligo- oder Polyphosphorsäure mitumfassen.

Als Metalle kommen in den Metallphosphaten, bzw. in den Metallphosphat-Aminsalzen solche der ersten, zweiten und dritten, sowie achten Gruppe des Periodensystems in Betracht, wie etwa Fe, Ni, Mg, Ca, Ba, Zn, vorzugsweise B, Al und gegebenenfalls Na, K, einzeln und/oder in Kombination miteinander, in Betracht.

Als Metallphosphat-Aminsalze kommen vorzugsweise solche in Betracht, bei denen als Amine, Alkanolamine und/oder Ammoniak, insbesonders Monoethanolamin, gegebenenfalls aber auch Di- oder Triethanolamin Verwendung finden.

Als wäßrige Metallphosphat-Aminsalz-Lösungen dienen erfindungsgemäß vorzugsweise wäßrige Lösungen der Umsetzungsprodukte von Alkanolaminen mit sauren Metallphosphaten. Solche werden beispielsweise beschrieben in DE-OS 3 833 977, 3 912 552, 4 023 310 und 4 126 702, von besonderem Interesse sind die in DE-OS 4 226 044, 4 236 936, 4 314 299, 4 339 474 beschriebenen Bor-haltigem Metallphosphat-Aminsalze, bzw. wäßrigen Aminsalzlösungen, oder auch die in DE-OS 4 401 636 beschriebenen, Kieselsole enthaltenden Typen.

Die einfachste Form der Herstellung solcher Metallphosphat-Aminsalzlösungen besteht darin, daß man ein saures Phosphat eines der genannten Metalle in wäßrigem Medium unter gutem Rühren und gegebenenfalls Erwärmung auf 20 bis 120°C mit einem Alkanolamin, bzw. Alkanolamingemisch versetzt und dabei pH-Werte zwischen ca. 5,5 und 8, vorzugsweise zwischen 6 und 7,5 einstellt.

Diese Lösungen haben für den erfindungsgemäßen Einsatz als Komponente im Schaumstoff-Reaktionsgemisch, zweckmäßigerweise Wassergehalte von weniger als 50, vorzugsweise von 40 bis 20 Gew.-%.

Bei der an sich bekannten Herstellung von gegebenenfalls zelligen Polyurethanharnstoffen, einschließlich Schäumen werden Polyisocyanate (beispielsweise auf Basis von Diphenylmethan-diisocyanat) zur Umsetzung gebracht mit Verbindungen mit mindestens zwei reaktionsfahigen Wasserstoffatomen mit Molekulargewichten in der Regel von 62 bis 10 000 und gegebenenfalls mit Wirkstoff- und Additivkomponenten, denen erfindungsgemäß die wäßrigen Metallphosphat-Aminsalz-Lösungen hinzugefügt werden. Erfindungsgemäß haben sich folgende Kombinationen als besonders geeignet erwiesen:
Als Verbindungen mit mindestens zwei reaktionsfähigen Wasserstoffatomen mit Molekulargewichten in der Regel von 62 bis 10 000 allein oder im Gemisch:
Insbesondere aliphatische, vorzugsweise tertiäre Alkoxylierungsprodukte, insbesondere Ethoxylierungs- und/oder Propoxylierungsprodukte von Ammoniak und/oder Polyaminen mit 2 bis 12, vorzugsweise 2 bis 8 Aminogruppen, die OH-Zahlen über 50, vorzugsweise über 350 aufweisen, wie etwa Triethanolamin, Tripropanolamin oder die Propoxylierungs-, bzw. Ethoxylierungsprodukte von Triethanolamin, Ethylendiamin, Polyethylenpolyaminen und deren Gemischen; hier wären als besonders geeignete Komponenten zu nennen, Triethanolamin und seine Propoxylierungsprodukte mit OH-Zahlen zwischen 300 und 600.

Natürlich ist die Mitverwendung sonstiger bekannter, techniküblicher Reaktionskomponenten, die mit Isocyanaten reaktionsfähige Gruppierungen enthalten, auch in Betracht zu ziehen, z.B. Polyätherpolyole mit anderen, z.B. nicht basischen Startern oder anderen OH-Zahlen, bzw. solche mit Carboxyl-Endgruppen, Aminoendgruppen, Zuckerpolyole, Ester- und Polyesterpolyole, Polyepoxyde, Polyether- oder Polyesterpolyamine.

Als Wirkstoffkomponenten alleine oder im Gemisch:
Neben den gegebenenfalls anwesenden üblichen Stabilisatoren, zumeist auf Polyäther-polysiloxan-Basis, und neben üblichen erfindungsgemäß im allgemeinen nicht unbedingt erforderlichen, Aktivatoren auf Bais von tert.-Aminen, bzw. metallorganischen Verbindungen:
Carbonsäuren, d.h. Mono- aber auch Polycarbonsäuren mit 1 bis ca. 150, vorzugsweise 1 bis 60 C-Atomen, die vorzugsweise bei RT flüssig sind, wie etwa Ameisensäure, Essigsäure, (Alkyl)-Phenylessigsäuren vorzugsweise flüssige natürliche Fettsäuren wie insbesonders Ölsäure und Rizinolsäure, aber auch Leinölfettsäuren, Isostearinsäure, Tallölfettsäure, Sojaölfettsäure, Fischölfettsäure, Rapsölfettsäure, sonstige natürliche oder auch synthetische Fettsäuren und die aus solchen Fettsäuren zugänglichen sogenannten Dimer- und Trimersäuren.

Von erheblichen Interesse in Bezug auf Brandwidrigkeit sind hier auch bromierte, bzw. chlorierte Fettsäuren, etwa die Anlagerungsprodukte von Brom an Ölsäure oder Leinölfettsäuren.

Obgleich die Anwesenheit solcher Fettsäuren für die Erzeugung der erfindungsgemäßen Schaumstoffe nicht zwingend erforderlich ist, führt ihre sehr bevorzugte Anwesenheit überraschenderweise nicht nur zu einer erheblichen Beschleunigung der Schaumstoftbildung, sondern auch zu einer erheblich feinporigeren und leichteren Schaumstoffbildung, als sie ohne die Anwesenheit der Fettsäuren erfolgen würde.

Als Additivkomponenten allein oder im Gemisch:
Neben üblichen mineralischen oder organisch-polymeren Füllstoffen: Kohlenwasserstoffe, insbesonders niedrig siedende Verbindungen wie die üblichen Treibmittel, vorzugsweise Cyclopentan oder sonstige Kohlenwasserstoffe, ferner Fluorkohlenwasserstoffe und/oder Fluorchlorkohlenwasserstoffe sowie gegebenenfalls hoch siedende Typen wie die hydrophobierenden Paraffinöle und/oder Paraffinwachse, Polyisobutylene, Polyepoxide, Epoxidharze, z.B. Glyzidylether des Bisphenol A, Polysiloxane, Polyolefine, Polyfluorpolymere, aber auch, gegebenenfalls halogenierte, natürliche Fette und Öle, etwa Raps- oder Sojaöl, Tallöl, Rizinusöl.

Zu solchen Additivkomponenten sind aber auch zusätzlich brandwidrige, flüssige oder pulverige Zusätze zu zählen, beispielsweise blahfähige Graphite, blähfähige Glimmer, Silikate, Borsilikate, intumeszenzfähige oder auch ohne Intumeszenzwirkung Brandwidrigkeit vermittelnde Zusätze wie phosphorhaltige Polyole, Ammoniumphosphat, Ammoniumpolyphosphat, Ethylendiaminphosphat, Di - bzw. Triethanolamin-o-phosphat, Melamin, Melaminphosphat, Melamincyanurat, Dicyandiamid, Harnstoff, Biuret, Amide und Ester der Phosphorsäuren, etwa Trikresylphosphat, Tris-trichlorethylphosphat, aber auch Ammoniumchlorid, Ammoniumbromid oder Halogenide von Aminen und Metallen, etwa NaBr oder Diethylentriamin-Hydrobromid bzw. Triethanolamin-hydrobromid, auch Zusätze von gegebenenfalls in wäßriger Lösung vorliegenden Ortho-, Meta-, Pyro- oder Polyphosphorsäuren bzw. von HCl oder HBr sind in Betracht zu ziehen, desgleichen Zusätze von TiO₂, Mg- oder Al-Hydroxyden, Gesteinsmehl, Dolomit, Kreide, Talkum.

Üblicherweise werden erfindungsgemäß die getrennt oder einzeln in den Misch- und Reaktionsraum eingebrachten Reaktions-, Wirkstoff- und Additivkomponenten mit 100-180, vorzugsweise 105-150 Gew.-% der stöchiometrisch äquivalenten Mengen (Abweichungen von ± 25 % sind durchaus üblich) an Polyisocyanaten vermischt und zur Reaktion gebracht. Verfahrensgemäß sind sowohl aliphatische, cyclische, araliphatische oder aromatische Polyisocyanate gemäß dem Stande der Technik geeignet. Bevorzugt werden die techniküblichen aromatischen Polyisocyanate, etwa Toluylendiisocyanate und deren bekannte Modifizierungsprodukte, vorzugsweise die hoch siedenden MDI-Typen der Technik und deren Modifizierungsprodukte.

Erfindungsgemäß werden außer den genannten Komponenten, dem Reaktionsgemisch noch wäßrige Lösungen von Metallphosphat-Aminsalzen hinzugefügt. Wenngleich natürlich die hinzugefügten Mengen der wäßrigen Lösungen beliebig klein sein können, werden ca. 50 bis 85 %ige, bevorzugt 60 bis 80 Gew.-%ige wäßrige Lösungen der Metallphosphat-Aminsalze in solchen Mengen zugesetzt, daß die im Gesamtsystem enthaltene Menge an Metallphosphat-Aminsalz-Feststoff im gesamten Reaktionsgemisch einen Gewichtsanteil von mehr als 25 Gew.-%, vorzugsweise mehr als 50 Gew.-%, insbesonders 52 bis 70 Gew.-%, ausmacht.

Dementsprechend ist die in stöchiometrischer Hinsicht zum Einsatz kommende Menge an Polyisocyanat auch höher, nämlich mehr als 100 Gew.-% der für die konventionellen Rezepturbestandteile - außer Wasser - äquivalenten Polyisocyanatmenge, z.B. über 105 %, vorzugsweise 105 bis 180 Gew.-%.

Die zur Herstellung der erfindungsgemäßen Schaumstoffe üblichen Rezepturen enthalten, bezogen auf Wasser- und Treibmittel-freien Feststoff, an Metallphosphataminsalz, vorzugsweise 25 bis 70, insbesonders 50 bis 65 Gew.-%; an den vorab genannten Reaktionskomponenten, 30-75, vorzugsweise 35-55 Gew.- % sowie 0 bis 20, vorzugsweise 1 bis 10 Gew.-%, an den als Wirkstoftkomponenten bezeichneten Carbonsäuren, während die als Additivkomponenten bezeichneten Zusätze im bevorzugten Falle in der Gesamtrezeptur in Mengen unter 50 Gew.-% enthalten sind, obgleich auch, z.B. im Falle des Blähgraphits, wesentlich höhere Zusatzmengen, etwa bis zu 80 % in Betracht kommen.

Da die erfindungsgemäß in relativ großer Menge mitzuverwendenden wässrigen Metallphosphat-Aminsalzlösungen das Reaktionsgemisch stark kühlen, reicht die sich einstellende Reaktionstemperatur bzw. Reaktionsgeschwindigkeit oftmals nicht aus, um die gegebenenfalls mitverwendeten Treibmittel, etwa Cyclopentan, bzw. das entstehende CO₂ zu einem guten Aufschäumen zu veranlassen. Daher ist es zweckmäßig, das Reaktionsgemisch zusätzlich zu erwärmen, entweder während vor oder nach der Zusammenführung der verschiedenen Komponenten. Die Erwärmung kann durch Mikrowellen, durch Wechselfelder, durch IR-Strahlung oder durch Erhitzung mittels heißer Gase oder einfach durch Einstellen bzw. Hindurchführen des Reaktionsgemisches in/durch einen Wärmetauscher bzw. einen Ofen erfolgen. Hier haben sich Ofentemperaturen von 30 bis 170°C, insbesonders 65 bis 95°C gut bewährt.

Die erfindungsgemäßen Reaktionsprodukte können auch ohne Treibmittel, gegebenenfalls auch unter Überdruck hergestellt und z.B. in massiver Form erhalten werden, vorzugsweise werden sie jedoch als Schaumstoffe erhalten.

Die Schaumstoffherstellung selbst kann prinzipiell nach den in der Pu-Schaumstoff-Technik üblichen, batchweisen oder kontinuierlichen, Hochdruck-, Mitteldruck- oder Niederdruck-Vermischungsverfahren mittels Düsen- oder Rührwerksmischköpfen erfolgen. Ebenso können Spritzverfahren, Rotationsgußverfahren oder Doppelband-Produktionsverfahren, z.B. zur Sandwich-Herstellung zwischen Papierbahnen, bzw. Formverschäumungsverfahren in offenen oder geschlossenen, beheizten oder unbeheizten Formen, drucklos oder unter Druck in Betracht gezogen werden.

Die erhältlichen Schaumstoffe haben im allgemeinen Raumgewichte zwischen 10 und 500, vorzugsweise 18 bis 50 g/l.

Sie finden vorallem Verwendung als Füllschaum, sowie im Isolier- und/oder Brandschutzbereich, wobei die Brandwidrigkeit, bzw. niedrige Brandlast der Schaumstoffe von besonderem Interesse ist.

Sie können auch zur Herstellung von Sandwichteilen mit den verschiedensten Deckschichten z.B. Papier, Glas- oder organische Gewebe, Gelege oder Vließe, Kunststoff, Holz oder Metall Verwendung finden, zum Ausfüllen von Hohlräumen, als Fixierhilfen im Bausektor, als Schalldämmung oder als Ab- bzw. Adsorptionsmittel, als Schleif- und Putzmittel, als Filter- bzw. Verpackungsmaterial, bzw. zur Stoßdämpfung.

Sie haben vielfach thermoplastischen Charakter und können spanabhebend oder durch thermische Verfahren bearbeitet, geprägt oder mehrdimensional verformt, bzw. geschnitten werden.

Im folgenden soll das Verfahren beispielhaft erläutert werden. Die angegebenen Teile und Prozente beziehen sich auf das Gewicht, sofern nichts anderes vermerkt ist.

### Beispiele

### Beispiel 1

Eine 76 %ige Aufschlämmung von Al(H₂PO₄)₃ in Wasser wird mit einer 76 %igen Lösung von Monoethanolamin in Wasser bei 70 bis 80°C unter gutem Rühren auf pH 7,0 eingestellt. Man rührt so lange nach, bis sich eine klare Lösung gebildet hat. diese Lösung wird auf RT abgekühlt.

200 Teile dieser Metallphosphat-Aminsalzlösung werden mit 50 Teilen eines Propoxylierungsproduktes von Triethanolamin mit einer OH-Zähl von 500 vermischt, sowie mit 25 Teilen Ölsäure, 10 Teilen Triäthanolamin, 2 Teilen eines handelsüblichen Stabilisators auf Polyätherpolysiloxanbasis und 10 Teilen Cyclopentan.

Zu diesem gut verrührten Gemisch gibt man nun 170 Teile eines handelsüblichen technischen MDI's (Desmodur® 44 V 20; Bayer AG) und vermischt intensiv einige Sekunden. Wenn das Reaktionsgemisch aufzuschäumen beginnt, wird es in eine Kastenform überführt, in der es zu einem sehr feinporigen, homogen wirkenden, zäh-harten Hartschaum aufschäumt. Nach 10 Tagen wird sein Raumgewicht mit 31 g/l festgestellt. Der Schaumstoff besteht zu ca. 37 % aus dem Metallphosphat-Aminsalz. Er hat einen dementsprechend niedrigen Kohlenstoffgehalt und eine dementsprechend verminderte Brandlast.

Nach 10 Tagen Lagerung unter Wasser schwimmt der Schaum immer noch auf. Er ist als Isolations- und Dämmaterial verwendbar.

### Beispiel 2

In eine 70 %ige wäßrige Aufschlämmung von Ca(H₂PO₄)₂ wird eine 70 %ige Lösung gleicher Teile von Diethanolamin und Monoethanolamin bei RT in solcher Menge eingerührt, daß sich ein pH von 7 einstellt. Dann wird noch 2 h bei 70°C gerührt. Die entstandene leicht trübe Lösung wird im in gleicher Weise, wie die Phosphatsalz-Lösung in Beispiel 1 verarbeitet.

Man erhält einen gleichartigen sehr feinporigen Schaumstoff, der als Dämmstoff Verwendung finden kann.

### Beispiel 3

2 768 Teile 85 %ige o-Phosphorsäure werden mit 660 Teilen Wasser verdünnt. Dann setzt man 624 Teile Aluminiumhydroxyd hinzu und rührt 30 Min bei 90°C. Es entsteht eine klare Lösung des sauren Aluminiumphosphats.

Dann löst man 741,6 Teile o-Borsäure in 1 600 Teilen Monoethanolamin unter Zusatz von 24 Teilen Wasser bei 70°C, wobei eine klare Lösung entsteht.

Die beiden so erhaltenen klaren Lösungen werden nun unter gutem Rühren bei ca. 80°C vereinigt, wobei eine klare Lösung des Ethanolaminsalzes von Bor-Aluminiumphosphat entsteht.

Diese ist ca. 76 %ig und hat bei 20°C eine Dichte von ca. 1,6 und eine Viskosität von ca. 3 000 mPas.

Diese Lösung wird als AB-Lösung bezeichnet und für die folgenden Beispiele eingesetzt.

Die AB-Lösung wird entsprechend der Metallphosphat-Aminsalzlösung gemäß Beispiel 1 eingeseetzt. Man erhält auch in diesem Fall einen gleichartigen Schaumstoff, der für Dämmstoffzwecke einsetzbar ist.

### Beispiel 4

Mit der AB-Lösung wird ein Schaumstoff analog Beispiel 1 aber ohne Zusatz von Ölsäure hergestellt. Der erhaltene Schaumstoff ist grobporiger als der nach Beispiel 3 erhaltene, sein Raumgewicht liegt bei 40 g/l und er härtet nur langsam aus. Die Aushärtung wird dadurch beschleunigt, daß man die Kastenform mit dem aufsteigenden Schaum in einen Umluftofen mit 90°C gibt.

Der entstandene Schaum wird in Streifen von 5x20x2cm geschnitten und mit einer Bunsenflamme beflammt. Der Schaum brennt zwar in der Flamme, aber erlischt, wenn die Bunsenflamme gelöscht wird, er entwickelt nur wenig Rauch.

### Beispiel 5

150 Teile AB-Lösung werden mit 26 Teilen eines mit gleichen Teilen Ethylenoxyd und Propylenoxyd alkoxylierten Triethanolamins mit einer OH-Zahl von 480, mit 12 Teilen Rizinolsäure, 7,5 Teilen Triethanolamin, 2 Teilen eines handelsüblichen Stabilisators auf Polyätherpolysiloxanbasis und 10 Teilen Cyclopentan gut verrührt und dann intensiv mit 85 Teilen technischen MDI vermischt.

Das Reaktionsgemisch schäumt zu einem homogenen, feinporigen Schaumstoff mit einem Raumgewicht von 31 g/l auf. Dieser Schaumstoff ist ebenfalls nach Beflammung selbstverlöschend. Er enthält ca. 47% Feststoffanteil in Form des Metallphosphat-Aminsalzes und kann zum Ausfüllen von Hohlräumen im Bausektor Verwendung finden.

### Beispiel 6

5o Teile propoxyliertes Triäthanolamin mit einer OH-Zahl von ca. 500 werden mit 25 Teilen Ölsäure, 16 Teilen Triethanolamin, 4,5 Teilen des in Beispiel 5 verwendeten Stabilisators und 20 Teilen Cyclopentan sowie mit 400 Teilen AB-Lösung und 30 Teilen 40 %iger wäßriger KOH-Lösung intensiv vermischt und dann mit 180 Teilen techn. MDI versetzt und weiter intensiv gemischt. Sobald das Reaktionsgemisch aufzuschäumen beginnt, wird es in eine Kastenform überführt und diese in einen 90°C-Umluftschrank eingestellt, in dem der Aufschäumprozess weiter läuft und nach ca. 90 Sek beendet wird.

Man erhält einen feinporigen, zäh-harten Schaumstoff mit einem Raumgewicht von ca. 25 g/l. Dieser Schaumstoff enthält ca. 54 % Anteil Metallphosphat-Aminsalz-Feststoff und ist bei Beflammung nach geringer Rauchentwicklung selbstverlöschend.

Bei mikroskopischer Untersuchung erweist sich das Zellgerüst als quasi glasklar, ohne Hinweis auf eine Phasentrennung von organischer und anorganischer Phase. Dieses Ergebnis zeigt den integrierten Einbau von ca. 54 % des Metallphosphat aminsalzes in den Masseverbund. Diese erfindungsgemäß zuzusetzenden Komponenten haben nicht den Charakter von Füllstoffen, sondern sie bilden möglicherweise eine Art organisch modifiziertes keramisches Zellgerüst.

### Beispiel 7

Wie Beispiel 6, nur unter Verwendung von 600 Teilen AB-Lösung und 30 Teilen Cyclopentan. Das aufschäumende Reaklionsgemisch wird in einem Mikrowellenfeld bis zum Erreichen einer Durchschnittstemperatur des sich bildenden Schaumstoffs von ca. 90°C gehalten. Der Schaumbildungsprozess ist nach etwa 1,5 Minuten abgeschlossen. Man erhält einen etwas gröberporigen aber homogenwirkenden Schaumstoff mit einem Raumgewicht von ca. 30 g/l, der einen überraschend weichen, fast schon elastischen Eindruck macht.

Trotz des großen, bei über 60 % liegenden Anteils an Metallphosphataminsalz zeigt auch hier die mikroskopische Untersuchung nur glasartig klare Zellwände, ohne Hinweis auf Phasentrennung.

Möglicherweise ist der hier entstehende organischanorganische Verbund die Ursache für das wenig spröde Verhalten der Schaumstoffe.

### Beispiel 8

Man stelle eine Reaktionsmischung wie bei Beispiel 7 her, jedoch ohne Zusatz von Cyclopentan, und rührt solange bei einer auf 35°C begrenzten Temperatur, bis die Reaktionsmischung dickflüssig und schwer rührbar wird. Dann überführt man das Reaktionsgemisch in eine voll gefüllte, druckdichte Plattenform in der man es unter einem Preßdruck von 100 Bar bei 90°C 10 h ausreagieren läßt. Man erhält eine fast klare, massive Platte aus einem zäh-harten, thermoplastisch verformbaren Material.

### Beispiel 9

Man stellt eine Mischung her aus 300 Teilen AB-Lösung, 50 Teilen ethoxyliertem Ethanolamin mit einer OH-Zahl von 440, 10 Teilen Triethanolamin, 5,5 Teilen 85 % Ameisensäure, 2 Teilen Stabilisator aus Beispiel 6 und 11 Teilen Cyclopentan. In diese Mischung werden intensiv 170 Teile technisches MDI eingerührt. Wenn das Reaktionsgemisch aufzuschäumen beginnt, wird es in eine Kastenform überführt, in der es zu einem kleinporigen, homogen wirkenden Schaumstoff aufschäumt. Dieser ist zunächst relativ spröde. Er wird nunmehr unmittelbar nach dem Aufschäumen in einen 90°C-Umluftschrank gebracht und 30 Min nachgetempert. Danach hat man einen zäh-harten, nicht mehr spröde wirkenden Hartschaum mit einem Raumgewicht von 33 g/l, der selbstverlöschenden Charakter hat.

### Beispiel 10

Es wird wie bei Beispiel 6 gearbeitet, nur anstelle von Ölsäure wird jetzt die gleiche Gewichtsmenge an mit einem Mol Brom umgesetzter Ölsäure verwendet. Die Verschäumung läuft analog ab, der entstandene Schaumstoff erlischt bei Beflammung sofort, wenn die Flamme entfernt wird.

### Beispiel 11

500 Teile AB-Lösung werden auf 35°C vorgewärmt und in einer Mischapparatur mit einer bei 20°C hergestellten Abmischung von 25 Teile propoxyliertem Triethanolamin (OH-Zahl 500), 12,5 Teile Ölsäure, 40 Teile Triethanolamin, 3 Teile eines handelsüblichen Stabilisators auf Polyether-Polysiloxan-Basis und 30 Teile Cyclopentan, sowie mit 170 Teile eines technischen MDI (Desmodur 44 V 20, Bayer AG) intensiv vermischt.

Das Reaktionsgemisch wird in eine Kastenform aus Papier gegeben und in einem schwachen Mikrowellenfeld zum Aufschäumen gebracht, wobei die Mikrowellenerwärmung der Reaktionsmischung etwa einen Temperatursockel von 40°C des reagierenden Gemisches sicherstellte. Man erhielt einen feinporighomogenen wirkenden Schaumstoff mit einem Raumgewicht von 30 g/l mit selbstverlöschendem Charakter. Der Schaum war als ein Hartschaum mit gewisser Elastizität anzusprechen. Bei mikroskopischer Betrachtung zeigte sich, daß auch bei einem ca. 60 %igen Zusatz an Metallphosphatfeststoff dieser in die Schaumstoffmatrix völlig integriert war: Die Zellwände und Zellstege haben glasartig klaren durchsichtigen Charakter. Anzeichen einer Phasentrennung wurden nicht erkannt.

Derartige Schaumstoffe können von enthaltenem restlichen Wasser durch Mikrowellentrockuung oder Ofen- bzw. Lufttrocknung befreit werden. Sie eignen sich als Kernlagen für Isolations-Sandwichplatten mit geringer Brandlast.

### Beispiel 12

300 Teile AB-Lösung, 25 Teile eines Triethanolamins, das mit einer Mischung gleicher Teile Ethylenoxyd und Propylenoxyd bis zu einer OH-Zahl von 420 alkoxyliert wurde, sowie 13 Teile Leinölfettsäure, 1 Teil Stabilisator aus Beispiel 11, 25 Teile Triethanolamin und 25 Teile Pentan werden mit 45 Teilen technischem MDI aus Beispiel 11, sowie 45 Teilen technischem Toluylendiisocyanat (Desmodur T 80, Bayer AG) intensiv verrührt und in eine Cylinderform gegeben. In dieser schäumt das Material zu einem Schaumstoff mit homogener Porenstruktur und einem Raumgewicht von 28 g/l. Der Schaum ist selbstverlöschend und kann zu Isolationsszwecken Verwendung finden. Bemerkenswert ist auch hier, daß die Poren des Schaumstoffs aus einem einphasig-glasklar wirkendem Gerüstmaterial aufgebaut zu sein scheinen, daß der Metallphosphatkomplex also in das Gerüstmaterial integriert wurde.

### Beispiel 13

Wie Beispiel 12, jedoch wurden der Isocyanatmischung noch 30 Teile eines aliphatischen Lackisocyanats (Desmodur® N, Bayer AG) zugesetzt. Man erhält einen analog gearteten Schaumstoff, der jedoch deutlich feinporigen Charakter hat. Er kann für Isolationszwecke Verwendung finden.

### Beispiel 14

Es wird analog Beispiel 6 gearbeitet. Anstelle des propoxylierten Triethanolamins wird jetzt aber in gleicher Gewichtsmenge propoxyliertes Triethylentetramin, OH-Zahl 455 eingesetzt. Man erhält einen selbstverlöschenden, feinporigen Schaumstoff mit Raumgewicht 33 g/l.

### Beispiel 15

400 Teile AB-Lösung, 25 Teile eines Propoxylierungsproduktes von Ethylendiamin mit einer OH-Zahl von 470, 15 Teile Ölsäure, 3 Teile des Stabilisators aus Beispiel 11 und 30 Teile Cyclopentan werden gut vermischt und dann intensiv mit 130 Teilen technischem MDI aus Beispiel 11 verrührt. Dann gießt man in eine Kastenform und stellt in einen auf 60°C vorgeheizten Ofen. Man erhält einen homogen-feinporigen Hartschaum mit Raumgewicht 34 g/l und selbstverlöschenden Eigenschaften. Solche Schaumstoffe sind zur Hohlraumausschäumung im Baubereich von Interesse.

### Beispiel 16

300 Teile AB-Lösung werden mit 76 Teilen (NH₄)₂HPO₄ und 24 Teilen Wasser 1 h bei 70°C gerührt.

Von der so erhaltenen Lösung des so gebildeten, Ammonium-haltigen Komplexes werden 300 Teile mit 25 Teilen eines propoxylierten Ethanolamins mit einer OH-Zahl von ca. 500, sowie 12 Teilen Ölsäure, 20 Teilen Triethanolamin, 2 Teilen eines üblichen Stabilisators auf Polyetherpolysiloxan-Basis und 30 Teilen Cyclopentan bei Raumtemperatur verrührt.

Sodann setzt man unter intensiver Vermischung noch 110 Teile eines handelsüblichen technischen MDI-Typs (Desmodur® 44 V 20; Bayer AG) hinzu und läßt das Gemisch in einer Kastenform aufschäumen.

Man erhält einen homogen wirkenden, feinporigen Hartschaum mit einem Raumgewicht von ca. 30 g/l.

Setzt man dem Reaktionsgemisch vor der Isocyanatzugabe noch 20 Teile 40 %ige NaOH (wäßriges Lösung) zu, so erhält man einen vergleichbaren Schaumstoff mit RG = 21 g/l.

Bei einem Beflammungsversuch zeigt sich, daß diese Schaumstoffe noch weniger Brandneigung aufweisen und noch schneller bei Entfernung der Flamme verlöschen, als ein gleichartiger Schaum, der in gleicher Weise aus reiner AB-Lösung hergestellt wurde.

### Beispiel 17

Es wird wie bei Beispiel 16 gearbeitet. Jedoch werden vor der Reaktion mit dem Polyisocyanat noch 50 Teile blähfähigen Graphits (SOₓ/NOₓ-Blähgraphit, Handelsware) zugesetzt.

Der so erhaltene Schaumstoff mit Raumgewicht von ca. 33 g/l intumesziert bei Beflammung und erlischt sofort bei Entfernung der Beflammungsquelle. Dieser Typ ist von besonderem Interesse für die Erstellung von Kabelschotts, und sonstigen Brandsperren im Bereich des vorbeugenden Brandschutzes.

## Patentansprüche

1. Gegebenenfalls zellige Polyurethane und/oder Polyurethanpolyharnstoffe, enthaltend in integrierter Form Metallphosphate und/oder Aminsalze saurer Metallphosphate.

2. Polyurethan- und/oder Polyurethan-polyharnstoff-Schaumstoffe gemäß Anspruch 1, mit Raumgewichten zwischen 10 und 500 g/l und Festgehaltsanteilen über 25 Gew.-% an Aminsalzen saurer Metallphosphate in Form von Reaktionsprodukten mit Isocyanat-Polyol-Gemischen.

3. Polyurethan- und/oder Polyurethan-polyharnstoff-Schaumstoffe gemäß Ansprüchen 1 und 2 integriert, enthaltend einzeln oder im Gemisch Phosphate der Metalle Na, K, Mg, Ca, Zn, B, Al.

4. Polyurethan- und/oder Polyurethan-polyharnstoff-Schaumstoffe gemäß Ansprüchen 1 bis 3, enthaltend Ammonium- und/oder Alkanolaminsalze von sauren Metallphosphaten.

5. Polyurethan- und/oder Polyurethan-polyharnstoff-Schaumstoffe gemäß Ansprüchen 1 bis 4, enthaltend Monoethanolaminsalze von sauren Metallphosphaten.

6. Verfahren zur Herstellung von gegebenenfalls zelligen Polyurethanen und/oder Polyurethan-polyharnstoffen gemäß Ansprüchen 1 bis 5 durch an sich bekannte Umsetzung von Polyisocyanaten mit Verbindungen mit mindestens zwei reaktionsfähigen Wasserstoffatomen vom Molekulargewicht 62 bis 10 000 und gegebenenfalls Hilfs- und Zusatzmitteln., dadurch gekennzeichnet, daß man als zusätzliche Reaktionskomponente wäßrige Lösungen von Aminsalzen saurer Metallphosphate hinzufügt und bei Isocyanat-Kennzahlen von vorzugsweise über 100 (bezogen auf organische Reaktivkomponenten) arbeitet.

7. Verfahren gemäß Anspruch 6, dadurch gekennzeichnet, daß man zusätzlich Carbonsäuren und/oder Fettsäuren hinzufügt.

8. Verfahren gemäß Ansprüchen 6 und 7, dadurch gekennzeichnet, daß als Aminsalze von sauren Metallphosphaten Alkanolaminsalze verwendet werden.

9. Verfahren gemäß Ansprüchen 6-8, dadurch gekennzeichnet, daß als Verbindungen mit mindestens zwei reaktionsfähigen Wasserstoffatomen vom Molekulargewicht 62-10 000 Alkanolamine und/oder - deren Alkoxylierungsprodukte, vorzugsweise mit OH-Zahlen zwischen 400 und 600, verwendet werden.

10. Formteile, Dämmstoffe und Sandwichkonstruktionen, enthaltend Schaumstoffe gemäß Ansprüchen 1 bis 5.
